# EUROPEAN PATENT SPECIFICATION

(11) **EP 2 831 359 B1**
(45) Date of publication and mention of the grant of the patent: **01.11.2017**
(21) Application number: 13714474.7
(22) Date of filing: 21.03.2013
(51) Int. Cl.: E21B 4/00, F16C 33/04, F16C 33/10, F16C 33/26

(54) **BEARING ASSEMBLY**
LAGERBAUGRUPPE
ENSEMBLE PALIERS

(30) Priority: 28.03.2012 US 201213432224
(43) Date of publication of application: 04.02.2015
(73) Proprietor: US Synthetic Corporation, Orem, UT 84058 (US)
(72) Inventor: PETERSON, S., Barrett, Orem, UT 84058 (US); GONZALEZ, Jair, J., Provo, UT 84601 (US); BERTAGNOLLI, Kenneth, E., Riverton, UT 84065 (US); MUKHOPADHYAY, Debkumar, Sandy, UT 84094 (US); MIESS, David, P., Highland, UT 84003 (US); CHAPMAN, Mark, P., Provo, UT 84601 (US); WARD, Ronald, W., Pleasant Grove, UT 84062 (US); CHRISTENSEN, Nicholas, Spanish Fork, UT 84660 (US); CROCKETT, Damon, B., Mapleton, UT 84664 (US); SANI, Mohammad, N., Orem, UT 84058 (US)
(74) Representative: Studio Torta S.p.A.
(86) International application number: PCT/US2013/033324
(87) International publication number: WO 2013/148465

(56) References cited:
- EP-A2- 0 543 461
- US-A- 5 342 129
- US-A1- 2004 190 804

## Description

### BACKGROUND

Subterranean drilling systems that employ downhole drilling motors are commonly used for drilling boreholes in the earth for oil and gas exploration and production. Such a subterranean drilling system typically includes a downhole drilling motor that is operably connected to an output shaft. A pair of thrust-bearing apparatuses also can be operably coupled to the downhole drilling motor. A rotary drill bit configured to engage a subterranean formation and drill a borehole can be connected to the output shaft. As the borehole is drilled with the rotary drill bit, pipe sections may be connected to the subterranean drilling system to form a drill string capable of progressively drilling the borehole to a greater size or depth within the earth.

Each thrust-bearing apparatus includes a stator that does not rotate relative to the motor housing and a rotor that is attached to the output shaft and rotates with the output shaft. The stator and rotor each includes a plurality of bearing elements that may be fabricated from polycrystalline diamond compacts ("PDCs") that provide diamond bearing surfaces that bear against each other during use.

In operation, high-pressure drilling fluid may be circulated through the drill string and power section of the downhole drilling motor, usually prior to the rotary drill bit engaging the bottom of the borehole, to generate torque and rotate the output shaft and the rotary drill bit attached to the output shaft. When the rotary drill bit engages the bottom of the borehole, a thrust load is generated, which is commonly referred to as "on-bottom thrust" that tends to compress and is carried, at least in part, by one of the thrust-bearing apparatuses. Fluid flow through the power section may cause what is commonly referred to as "off-bottom thrust," which is carried, at least in part, by the other thrust-bearing apparatus. The drilling fluid used to generate the torque for rotating the rotary drill bit exits openings formed in the rotary drill bit and returns to the surface, carrying cuttings of the subterranean formation through an annular space between the drilled borehole and the subterranean drilling system. Typically, a portion of the drilling fluid is diverted by the downhole drilling motor to help cool and lubricate the bearing elements of the thrust-bearing apparatuses. Insufficient heat removal may cause premature damage to the thrust-bearing apparatuses.

The on-bottom and off-bottom thrust carried by the thrust-bearing apparatuses can also be extremely large and generate significant amounts of energy. The operational lifetime of the thrust-bearing apparatuses often can determine the useful life of the subterranean drilling system. Therefore, manufacturers and users of bearing apparatuses and subterranean drilling systems continue to seek improved bearing assemblies and apparatuses with a longer useful life.

US5342129A and US 2004/190804A1 discloses bearing apparatuses comprising a plurality of bearing elements distributed circumferentially about an axis.

### SUMMARY

The invention relates to bearing assemblies according to claim 1 and a related method according to claim 13.

### BRIEF DESCRIPTION OF THE DRAWINGS

The drawings illustrate several embodiments, wherein identical reference numerals refer to identical or similar elements or features in different views or embodiments shown in the drawings.
**FIG. 1A** is an isometric view of a thrust-bearing assembly according to an embodiment.
**FIG. 1B** is a top plan view of the thrust-bearing assembly shown in **FIG. 1A**.
**FIG. 1C** is an isometric cutaway view taken along line 1C-1C of the thrust-bearing assembly shown in **FIG. 1B****.**
**FIG. 1D** is an isometric view of one of the superhard bearing elements removed from the thrust-bearing assembly shown in **FIG. 1A****.**
**FIG. 1E** is a side elevation view of the superhard bearing element shown in **FIG. 1D****.**
**FIG. 1F** is a top plan view of the superhard bearing element shown in **FIG. 1D****.**
**FIG. 1G** is an isometric view of a superhard bearing element according to another embodiment.
**FIG. 2A** is an isometric view of a superhard bearing element according to another embodiment.
**FIG. 2B** is a side elevation view of the superhard bearing element shown in **FIG. 2A**.
**FIG. 2C** is a top plan view of the superhard bearing element show in **FIG. 2A**.
**FIG. 3A** is an isometric view of a superhard bearing element according to another embodiment not making part of the present invention.
**FIG. 3B** is a side elevation view of the superhard bearing element shown in **FIG**. **3A**.
**FIG. 3C** is a top plan view of the superhard bearing element shown in **FIG**. **3A**.
**FIG. 4A** is an isometric view of a thrust-bearing assembly according to an embodiment.
**FIG. 4B** is a top plan view of the thrust-bearing assembly shown in **FIG**. **4A****.**
**FIG. 4C** is a cross-sectional view of the thrust bearing assembly shown in **FIG. 4B** taken along line 4C-4C.
**FIG. 4D** is an isometric view of one of the superhard bearing elements removed from the thrust-bearing assembly shown in **FIG**. **4A**.
**FIG. 4E** is a side elevation view of the superhard bearing element shown in **FIG**. **4D**.
**FIG. 4F** is a top plan view of the superhard bearing element shown in **FIG. 4D****.**
**FIG. 4G** is an isometric view of a superhard bearing element according to another embodiment.
**FIG. 4H** is an isometric view of a superhard bearing element according to another embodiment.
**FIG. 4I** is an isometric view of a superhard bearing element according to another embodiment.
**FIG. 5A** is an isometric view of a thrust-bearing apparatus that may employ any of the disclosed thrust-bearing assemblies according to an embodiment, with the housing shown in cross-section.
**FIG. 5B** is a cross-sectional view of the thrust-bearing apparatus shown in **FIG. 5A** taken along line 5B-5B.
**FIG. 6A** is an isometric view of a radial bearing assembly according to an embodiment.
**FIG. 6B** is an isometric cutaway view of the radial bearing assembly shown in **FIG. 6A**.
**FIG. 7** is an isometric cutaway view of a radial bearing apparatus that may utilize any of the disclosed radial bearing assemblies according to various embodiments.
**FIG. 8** is a schematic isometric cutaway view of a subterranean drilling system that may utilize any of the disclosed bearing assemblies according to various embodiments.

### DETAILED DESCRIPTION

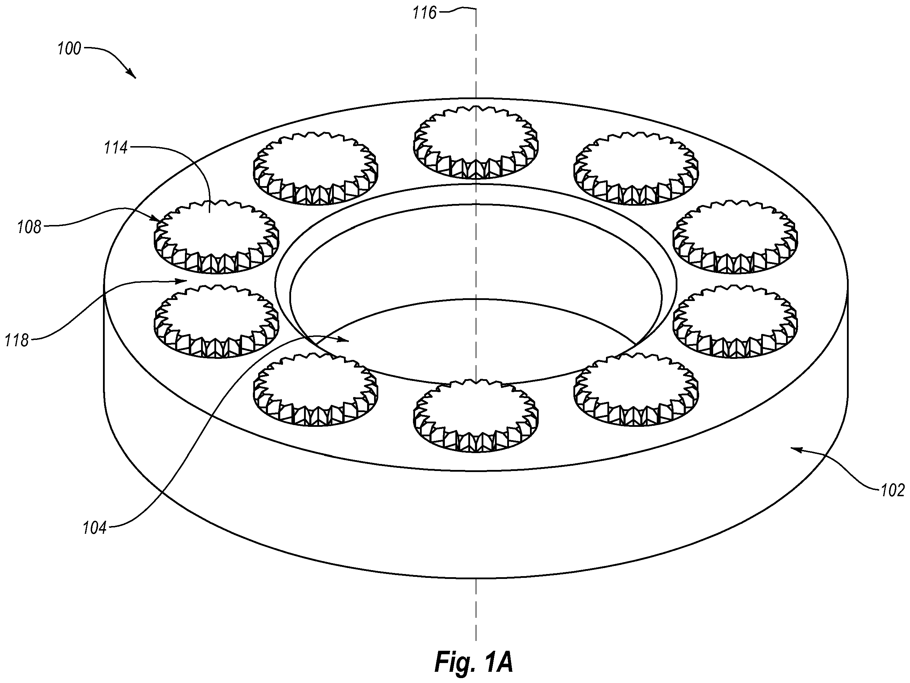

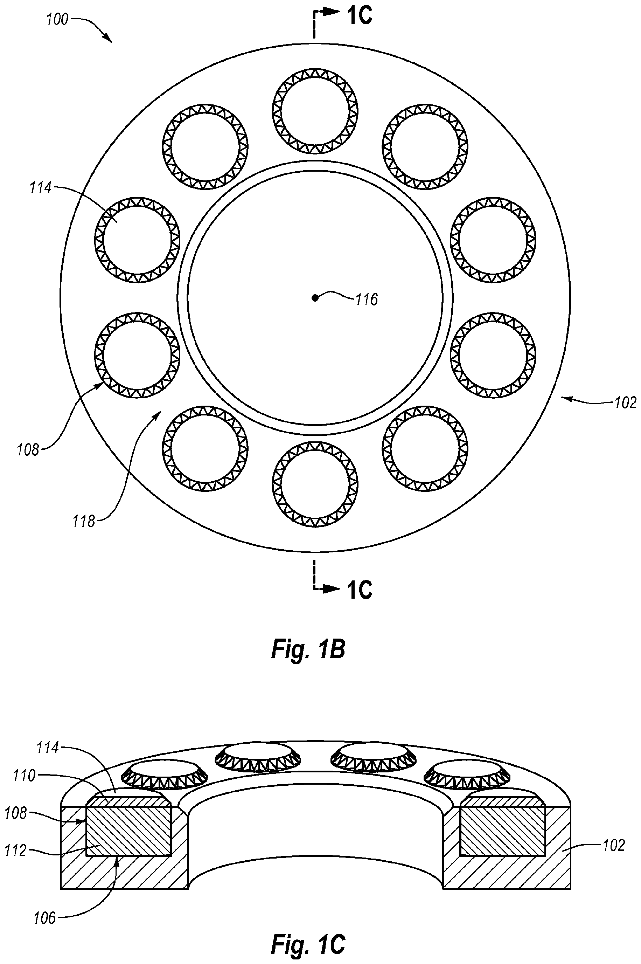

Embodiments of the invention relate to bearing assemblies, bearing apparatuses and motors, pumps, or other mechanical assemblies that include superhard bearing elements having texture features configured to improve lubrication and/or cooling of the superhard bearing elements. During use, the superhard bearing elements may not be able to effectively cool so at least some of the superhard bearing elements may be provided with one or more texture features (*e.g.,* at least one groove, dimple, recess, groove pattern, or other topography) formed therein to promote lubrication and/or cooling during use. **FIGS. 1A** and **1B** are isometric and top plan views of a thrust-bearing assembly 100 according to an embodiment.

The thrust-bearing assembly 100 may form a stator or a rotor of a thrust-bearing apparatus used in a subterranean drilling system. As shown in **FIGS. 1A** and **1B****,** the thrust-bearing assembly 100 may include a support ring 102 defining an opening 104 through which a shaft (not shown) of, for example, a downhole drilling motor may extend. The support ring 102 may be made from a variety of different materials. For example, the support ring 102 may comprise a metal, alloy steel, a metal alloy, carbon steel, stainless steel, tungsten carbide, or any other suitable metal or conductive or non-conductive material. The support ring 102 may include a plurality of recesses 106 (shown in **FIG. 1C**) formed therein.

The thrust-bearing assembly 100 further may include a plurality of superhard bearing elements 108. In an embodiment, one or more of the superhard bearing elements 108 may have a generally cylindrical shaped body. While the superhard bearing elements 108 are shown having a generally cylindrical shaped body, the one or more of the superhard bearing elements may have a generally rounded rectangular shaped body, a generally oval shaped body, a generally wedge shaped body, or any other suitable shaped body. The superhard bearing elements 108 may include a superhard table 110 bonded to a substrate 112, and a bearing surface 114 of the superhard table 110. The superhard bearing elements 108 are illustrated in **FIGS. 1A** and **1B** being distributed circumferentially about a thrust axis 116 along which a thrust force may be generally directed during use. As shown, gaps 118 may be located between adjacent ones of the superhard bearing elements 108. In an embodiment, at least one of, some of, or all of the gaps 118 may exhibit a width of about 0.00020 inches to 0.100 inches, such as about 0.00040 inches to 0.0010 inches, or about 0.00040 inches to 0.080 inches. In other embodiments, the gaps 118 may have widths that are relatively larger or smaller. In other embodiments, the gaps 118 may substantially be zero.

Each of the superhard bearing elements 108 may be partially disposed in a corresponding one of the recesses 106 (shown in **FIG. 1C** which is an isometric cutaway view taken along line 1C-1C of the thrust-bearing assembly shown in **FIG. 1B**) of the support ring 102 and secured partially therein via brazing, press-fitting, threadly attaching, fastening with a fastener, combinations of the foregoing, or another suitable technique. The superhard bearing elements 108 may be pre-machined to tolerances and mounted in the support ring 102 and/or mounted to the support ring 102 and the bearing surfaces 114 thereof and planarized (e.g., by lapping and/or grinding) so that the bearing surfaces 114 are substantially coplanar. Optionally, one or more of the superhard bearing elements 108 may exhibit a peripherally extending edge chamfer. However, in other embodiments, the edge chamfer may be omitted.

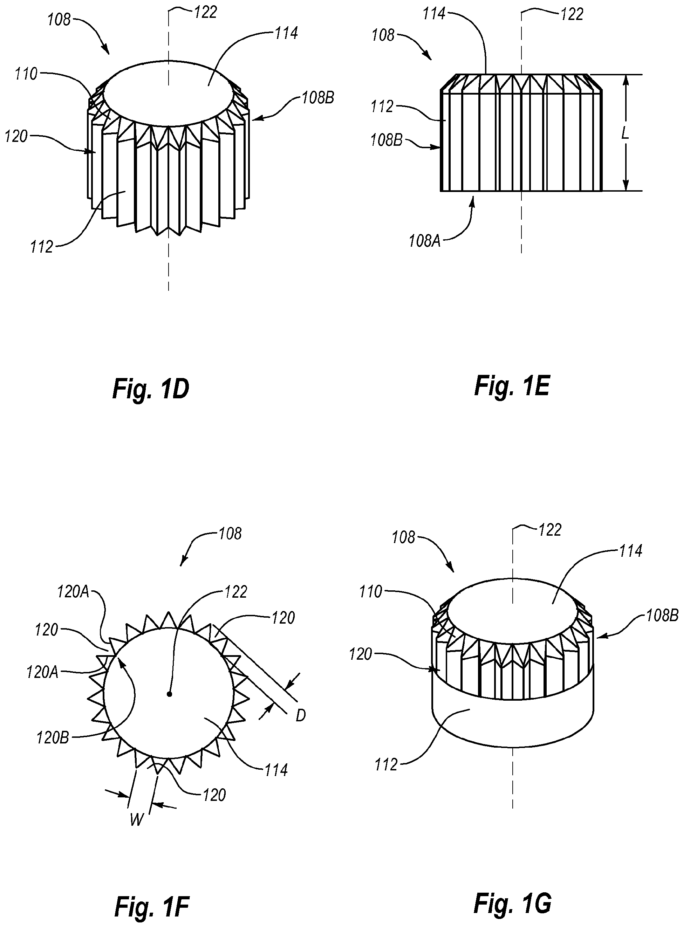

**FIGS. 1D**-**1G** are isometric, side elevation, and top plan views of a superhard bearing element 108 removed from the thrust-bearing assembly 100. As used herein, a "superhard bearing element" is a bearing element including a bearing surface that is made from a material exhibiting a hardness that is at least as hard as tungsten carbide.

In any of the embodiments disclosed herein, the superhard bearing elements 108 may each comprise one or more superhard materials, such as polycrystalline diamond, polycrystalline cubic boron nitride, silicon carbide, tungsten carbide, or any combination of the foregoing superhard materials. For example, the superhard table 110 may comprise polycrystalline diamond and the substrate 112 may comprise cobalt-cemented tungsten carbide. Furthermore, in any of the embodiments disclosed herein, the polycrystalline diamond table may be leached to at least partially remove or substantially completely remove a metal-solvent catalyst (*e.g*., cobalt, iron, nickel, or alloys thereof) that was used to initially sinter precursor diamond particles to form the polycrystalline diamond. In another embodiment, an infiltrant used to re-infiltrate a preformed leached polycrystalline diamond table may be leached or otherwise removed to a selected depth from a bearing surface. Moreover, in any of the embodiments disclosed herein, the polycrystalline diamond may be un-leached and include a metal-solvent catalyst (*e.g*., cobalt, iron, nickel, or alloys thereof) that was used to initially sinter the precursor diamond particles that form the polycrystalline diamond and/or an infiltrant used to re-infiltrate a preformed leached polycrystalline diamond table. Examples of methods for fabricating the superhard bearing elements and superhard materials and/or structures from which the superhard bearing elements can be made are disclosed in U.S. Patent Nos. 7,866,418; 7,998,573; and 8,034,136; and co-pending U.S. Patent Application No. 11/545,929; the disclosure of each of the foregoing patents and applications is incorporated herein, in its entirety, by this reference.

The diamond particles that may be used to fabricate the superhard table 110 in a high-pressure/high-temperature process ("HPHT)" may exhibit a larger size and at least one relatively smaller size. As used herein, the phrases "relatively larger" and "relatively smaller" refer to particle sizes (by any suitable method) that differ by at least a factor of two (*e.g.,* 30 µm and 15 µm). According to various embodiments, the diamond particles may include a portion exhibiting a relatively larger size (*e.g.,* 40 µm, 30 µm, 20 µm, 15 µm, 12 µm, 10 µm, 8 µm) and another portion exhibiting at least one relatively smaller size (*e.g.,* 6 µm, 5 µm, 4 µm, 3 µm, 2 µm, 1 µm, 0.5 µm, less than 0.5 µm, 0.1 µm, less than 0.1 µm). In an embodiment, the diamond particles may include a portion exhibiting a relatively larger size between about 10 µm and about 40 µm and another portion exhibiting a relatively smaller size between about 1 µm and 4 µm. In some embodiments, the diamond particles may comprise three or more different sizes (*e.g.,* one relatively larger size and two or more relatively smaller sizes), without limitation. The resulting polycrystalline diamond formed from HPHT sintering the aforementioned diamond particles may also exhibit the same or similar diamond grain size distributions and/or sizes as the aforementioned diamond particle distributions and particle sizes. Additionally, in any of the embodiments disclosed herein, the superhard bearing elements 108 may be free-standing (*e.g*., substrateless) and formed from a polycrystalline diamond body that is at least partially or fully leached to remove a metal-solvent catalyst initially used to sinter the polycrystalline diamond body.

Referring to **FIG. 1D**, at least some of the superhard bearing elements 108 may include one or more texture features (*e.g*., at least one groove, dimple, recess, pattern, other topography, or combinations thereof) configured to influence cooling, lubrication, and/or bearing capacity of the superhard bearing elements 108 and/or the support ring 102. For example, one or more grooves 120 may be formed in a lateral surface 108B of the superhard bearing elements 108. In an embodiment, the grooves 120 may provide one or more flow paths for lubricating fluid between the lateral surfaces 108B of the superhard bearing elements 108 and/or sidewalls of the recesses 106 in the support ring 102. Such a configuration may increase the surface area of the superhard bearing elements 108 and/or the support ring 102 in contact with the lubricating fluid to enhance cooling the thrust-bearing assembly 100. In an embodiment, the grooves 120 may direct lubricating fluid over and/or around the superhard bearing elements 108 and/or the support ring 102 to enhance cooling and/or lubrication. In an embodiment, the grooves 120 may influence flow characteristics of the lubricating fluid. In an embodiment, the grooves 120 may increase bearing capacity by helping to prevent the superhard bearing elements from overheating. For example, the grooves 120 may increase the surface area of the superhard bearing elements 108 to enhance heat transfer from the superhard bearing elements 108. In yet other embodiments, the grooves 120 may increase bearing capacity by providing engagement features for adhesives, epoxy, or other securing elements to help secure the superhard bearing elements 108 in the recesses 106.

The one or more grooves 120 may be formed by electro-discharge machining ("EDM"), laser-cutting, computer numerical control ("CNC") milling, grinding, combinations thereof, or otherwise machining the one or more grooves 120 in the superhard bearing elements 108 before or after securing the superhard bearing elements 108 to the support ring 102. For example, suitable laser-cutting techniques are disclosed in U.S. Application No. 13/166,007 filed on June 22, 2011, the disclosure of which is incorporated herein, in its entirety, by this reference.

As shown in **FIG. 1E**, some or all of the grooves 120 may follow a generally straight path along the lateral surface 108B with a length L that extends axially generally between the bearing surface 114 and a bottom surface 108A of the superhard bearing element 108. Such a configuration may develop eddies in the lubricating fluid flowing generally traverse to the grooves 120 to enhance the cooling of the lubricating fluid. In other embodiments, the length L of some or all of the grooves 120 may extend along only a portion of the lateral surface 108B. For example, as shown in **FIG. 1G****,** the grooves 120 may extend between the bearing surface 114 and a first location above the bottom surface 108A of the superhard bearing element 108. In an embodiment, the first location may generally correspond to an upper surface of the support ring 102 such that the grooves 120 extend between the bearing surface 114 and the upper surface of the support ring 102. Such a configuration may help to secure the superhard bearing elements 108 within the recesses 106. For example, brazed-joint strength between the superhard bearing element 108 and the recess 106 may be improved by providing a lateral surface on the portion of the superhard bearing element 108 within the recess 106 that generally corresponds to the lateral surface of the recess 106. Moreover, while the grooves 120 are illustrated following a generally straight path, some or all of the grooves 120 may follow a generally arcuate path, a generally semi-cylindrical path, a generally S-shaped path, a generally U-shaped path, a generally V-shaped path, a generally linear path, or any other suitable path.

In an embodiment, the length L of the grooves 120 may be about 0.3 inches to about 1 inch, such as about 0.25 inches to about 0.5 inch or about 0.10 inch to about 0.3 inch. However, in other embodiments, the length L of the grooves 120 may be longer or shorter than the foregoing ranges. As illustrated, each of the grooves 120 may have at least substantially the same length L. However, in other embodiments, some or all of the grooves 120 may have substantially different lengths L, respectively. For example, in an embodiment, the superhard bearing elements 108 may include a first group of grooves 120 having lengths L of about 0.25 inch and a second group of grooves 120 having lengths L of about 0.5 inches.

While all the superhard bearing elements 108 are shown including substantially identical grooves 120, in other embodiments, only a portion of the superhard bearing elements 108 may have substantially identical grooves 120, the superhard bearing elements 108 may have grooves 120 of varying sizes and/or configurations, or only some of the superhard bearing elements 108 may include grooves 120.

The superhard bearing element 108 may have a height extending between the bearing surface 114 and the bottom surface 108A. In an embodiment, the relationship between the length L of the grooves 120 and the height of the superhard bearing elements 108 may be configured to influence cooling, lubrication and/or bearing capacity of the superhard bearing elements 108 and/or support ring 102. The length L of at least one of the grooves 120 may be at least: about five (5) percent; about fifteen (15) percent; about twenty five (25) percent; about fifty (50) percent; about seventy (70) percent; about eighty (80) percent; or about one hundred (100) percent of the height of the superhard bearing elements 108. In other embodiments, the length L of one or more of the grooves 120 may be about two (2) percent to about one hundred (100) percent; about ten (10) percent to about ninety (90) percent; or at least about twenty (20) percent of the height of at least one of the superhard bearing elements 108. In other embodiments, the length L of one or more of the grooves 120 and the height of one or more of the superhard bearing elements 108 may be larger or smaller relative to each other.

As illustrated in **FIG. 1F**, each of the grooves 120 may be further defined by a bottom portion 120B and opposing sidewalls 120A. In an embodiment, the grooves 120 may include edge features configured to influence flow conditions. For example, the grooves 120 may include beveled edges, rounded edges, chamfered edges, or the like. One or more of the grooves 120 may include edges that are sharpened, have notches, irregularly shaped, combinations thereof, or the like. Such a configuration may allow the grooves 120 to partially agitate, break-up or create desired flow characteristics in the lubricating fluid.

The grooves 120 may be substantially equidistantly and circumferentially distributed about a lateral periphery of the superhard bearing element 108. In other embodiments, the grooves 120 may be unevenly distributed about the periphery of the superhard bearing element 108. For example, the superhard bearing element 108 may include two grooves 120 on a first side of the lateral surface 108B and no grooves on a second side of the lateral surface 108B generally opposite the first side. In an embodiment, one or more of the grooves 120 may be formed generally parallel to an axis 122 of the superhard bearing element 108. In other embodiments, one or more of the grooves 120 may be generally non-parallel to the axis 122 of the superhard bearing element 108.

In an embodiment, the grooves 120 may have a generally V-shaped cross-section such that the bottom portion 120B is at least partially defined by the intersection of the opposing sidewalls 120A. In other embodiments, the grooves 120 may have a generally rectangular cross-section, a generally U-shaped cross-section, a generally semi-circular shaped cross-section, a generally parabolic shaped cross-section, a generally trapezoidal shaped cross-section, combinations thereof, or the like. The cross-section of the grooves 120 may influence the flow conditions of the lubricating fluid and/or the cooling of the superhard bearing elements 108. For example, in an embodiment, at least one of the grooves 120 may have a portion including a V-shaped cross-section configured to improve cooling of the superhard bearing element 108 and/or lubrication of the bearing surface 114 by increasing the fluid velocity of the lubricating fluid through that portion of the groove 120 and/or increasing the surface area in contact with the lubricating fluid. In other embodiments, the grooves 120 may include a first deeper cross-sectional shape followed by a second shallower cross-sectional shape to pump or impel the lubricating fluid.

Referring still to **FIG. 1F**, at least one of the grooves 120 may have a width W and a depth D. Variations of the depth D and/or the width W of the grooves 120 may help the grooves 120 lubricate and/or cool the superhard bearing elements 108. As shown in **FIG. 1F**, the depth D of the grooves 120 extends between the bottom portion of the grooves 120 and the lateral surface 108B. For example, the depth D may be about 0.1 inches to about 0.4 inches, such as about 0.15 inches to about 0.25 inches. As illustrated, the grooves 120 may have at least substantially the same depth D. However, in other embodiments, the grooves 120 may have at least substantially different depths D. In addition, the depths D of a groove 120 may vary along its path. For example, at least one of the grooves 120 may have a depth D that includes a deeper portion and a shallower portion.

As shown in **FIG. 1F**, the width W of the grooves 120 extends between the grooves 120. In an embodiment, the widths W of the grooves 120 may vary. For example, some or all of the grooves 120 may have a width W that tapers from the lateral surface 108B of the superhard bearing element 108 toward the bottom portion of the grooves 120. Such a configuration may provide the grooves 120 with a wider inlet for the lubricating fluid. In an embodiment, the width W of the grooves 120 may be about 0.1 inches to about 0.5 inches, such as about 0.2 inches to about 0.3 inches. In other embodiments, the widths W of the grooves 120 may be wider or narrower. As illustrated, the grooves 120 may have at least substantially the same width W. However, in other embodiments, some or all of the grooves 120 may have substantially different widths W.

In an embodiment, the relationship between the length L of one or more of the grooves 120 and the depth D of one or more of the grooves 120 may be configured to improve cooling, lubrication, and/or bearing capacity of the superhard bearing elements 108 and/or the support ring 102. For example, the length L of at least one of the grooves 120 may be at least: about one hundred (100) percent; about two hundred (200) percent; about three hundred (300) percent; about four hundred (400) percent; about five hundred (500) percent; about six hundred (600) percent; about seven hundred (700) percent; or about eight hundred (800) percent of the depth D of at least one of the grooves 120. In addition, the length L of at least one of the grooves 120 may be: about four hundred (400) percent to eight hundred (800) percent; or about five hundred (500) percent to seven hundred (700) percent of the depth of the grooves 120; or about six hundred (600) percent of the depth D of at least one of the grooves 120. In other embodiments, the depth D of one or more of the grooves 120 and the length L of one or more of the grooves 120 may be larger or smaller relative to each other.

In an embodiment, the relationship between the length L of one or more of the grooves 120 and the width W of one or more of the grooves 120 may be configured to improve cooling, lubrication, and/or bearing capacity of the superhard bearing elements 108 and/or the support ring 102. For example, the length L of at least one of the grooves 120 may be at least: about one hundred (100) percent; about two hundred (200) percent; about three hundred (300) percent; about four hundred (400) percent; about five hundred (500) percent; about six hundred (600) percent; about seven hundred (700) percent; or about eight hundred (800) percent of the width W of at least one of the grooves 120. In addition, the length L of at least one of the grooves 120 may be: about four hundred (400) percent to about eight hundred (800) percent; or about five hundred (500) percent to about seven hundred (700) percent; or at least about six hundred (600) percent of the width W of at least one of the grooves 120. In other embodiments, the width W of one or more of the grooves 120 and the length L of one or more of the grooves 120 may be larger or smaller relative to each other.

In an embodiment, the relationship between the depth D of one or more of the grooves 120 and the width W of the one or more of the grooves 120 may be configured to improve cooling, lubrication, and/or bearing capacity of the superhard bearing elements 108 and/or the support ring 102. For example, the depth D of at least one of the grooves 120 may be at least: about fifty (50) percent; about one hundred (100) percent; about one hundred and fifty (150) percent; about two hundred (200) percent; or about three hundred (300) percent of the width W of at least one of the grooves 120. In addition, the depth D of at least one of the grooves 120 may be about fifty (50) percent to about one hundred and fifty (150) percent; or about one hundred (100) percent of the width W of at least one of the grooves 120. In other configurations, the depth D of one or more of the grooves 120 and the width W of one or more of the grooves 120 may be larger or smaller relative to each other.

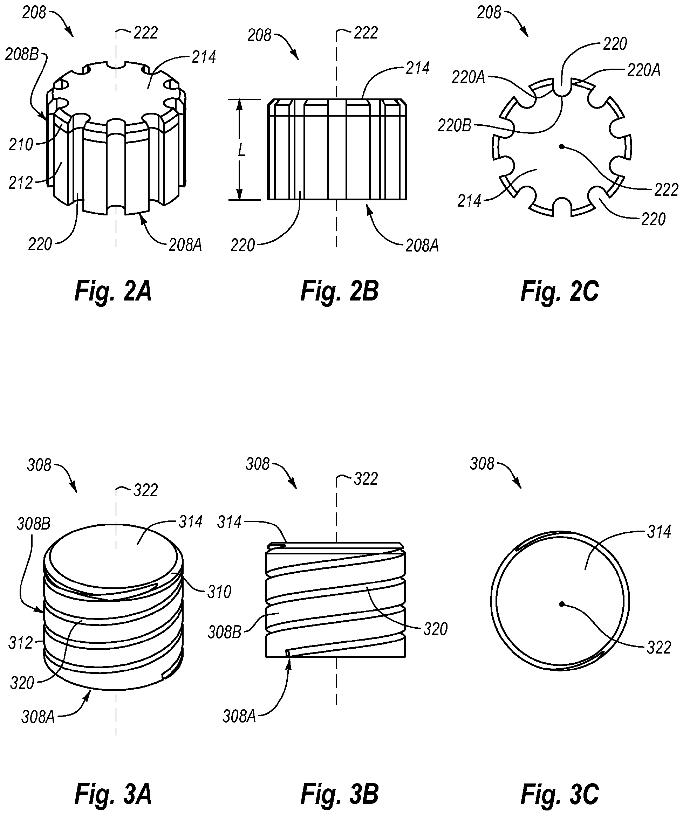

**FIGS. 2A-2C** are isometric, side elevation, and top plan views of a superhard bearing element 208 according to an embodiment. The superhard bearing element 208 may include a superhard table 210 bonded to a substrate 212, and a bearing surface 214 of the superhard table 210. The superhard bearing element 208 may be made from any of the materials discussed above for the superhard bearing elements 108. In the illustrated embodiment, the superhard bearing element 208 may have a generally cylindrical shape. In other embodiments, however, the superhard bearing element 208 may have a generally rectangular shape, a generally oval shape, a generally diamond shape, a generally triangular shape, a generally non-cylindrical shape, or other suitable shape.

The superhard bearing element 208 may include a plurality of grooves 220 formed in a lateral surface 208B of the superhard bearing element 208. The superhard bearing element 208 may include two, four, seven, or any suitable number of grooves 220. Some or all of the grooves 220 may follow a generally straight path along the lateral surface 208B generally parallel to an axis 222 of the superhard bearing elements 208. While the grooves 220 are illustrated generally parallel to the axis 222 of the superhard bearing elements 208, the one or more of the grooves 220 may be formed generally nonparallel to the axis 222 of the superhard bearing elements 208. For example, the grooves 220 may follow a generally curved path, a generally S-shaped path, a generally helical path, a generally V-shaped path, or the like. In an embodiment, some or all of the grooves 220 may have a length L that extends generally between the bearing surface 214 and a bottom surface 208A. In another embodiment, the length L of some or all of the grooves 220 may extend only through a first location between the bearing surface 214 and the bottom surface 208A and a second location. In other embodiments, some or all of the grooves 220 may have a length L that extends through a portion of the bearing surface 214, through a portion of the substrate 212, or a combination thereof.

As illustrated in **FIG. 2C****,** the groove 220 may include a cross-sectional area at least partially defined between sidewalls 220A and a bottom portion 220B. In an embodiment, the cross-sectional shape may be generally U-shaped. Such a configuration may increase surface area and/or cause the lubricating fluid flowing across the grooves 220 to abruptly slow and change flow direction to enhance heat removal from the superhard bearing elements 208 to thereby reducing the risk of the superhard bearing elements 208 overheating. Moreover, flow of the lubricating fluid generally traverse to the grooves 220 may create eddies in the lubricating fluid to enhance the cooling effect of the lubricating fluid. In other embodiments, the grooves 220 may have a generally v-shaped cross-section, a generally circular cross-section, a generally rectangular cross-section, a generally rounded rectangular shape, a generally trapezoidal cross-section, combinations thereof, or the like.

**FIGS. 3A-3C** are isometric, side elevation, and top plan views of a superhard bearing element 308 according to an embodiment not making part of the present invention. The superhard bearing element 308 may include a superhard table 310 bonded to a substrate 312, and a bearing surface 314 of the superhard table 310. The superhard bearing element 308 may be made from any of the materials discussed in relation to the superhard bearing elements 108. In the illustrated embodiment not making part of the present invention, the superhard bearing element 308 may have a generally cylindrical shaped body. In other embodiments, however, the superhard bearing element 308 may have a generally rectangular shape, a generally oval shape, a generally wedge shape, a generally triangular shape, or other suitable shape.

The superhard bearing element 308 may include a groove 320 formed in a lateral surface 308B of the superhard bearing element 308. The superhard bearing element 308 may include two, three, or ten, or any suitable number of grooves 320.

The groove 320 may follow a path generally extending along a right-handed or left-handed curve or helix. The one or more grooves 320 may follow a generally helical path, a generally double helical path, a generally spiral path, or other suitable path. In an embodiment, the path may correspond to a length of the one or more grooves 320. The groove 320 may extend about the periphery of the superhard bearing element 308 between about two (2) and ten (10) times, or more. Such a configuration may allow the lubricating fluid to flow about the superhard bearing element 308 in a spiraling pattern to enhance heat removal from the superhard bearing element 308. In other embodiments, the groove 320 may extend about the periphery of the superhard bearing elements 308 less than one (1) time, five (5) times, seven (7) times, ten (10) times, or any suitable number of times.

The groove 320 may extend generally between the bearing surface 314 and the bottom surface 308A of the superhard bearing element 308. The groove 320 may also extend generally between the bearing surface 314 and a first location between the bearing surface 314 and a bottom surface 308A. In yet other embodiments, the groove 320 may extend generally between the bottom surface 308A and a second location between the bottom surface 308A and the bearing surface 314. Moreover, the groove 320 may extend between a first location and a second location.

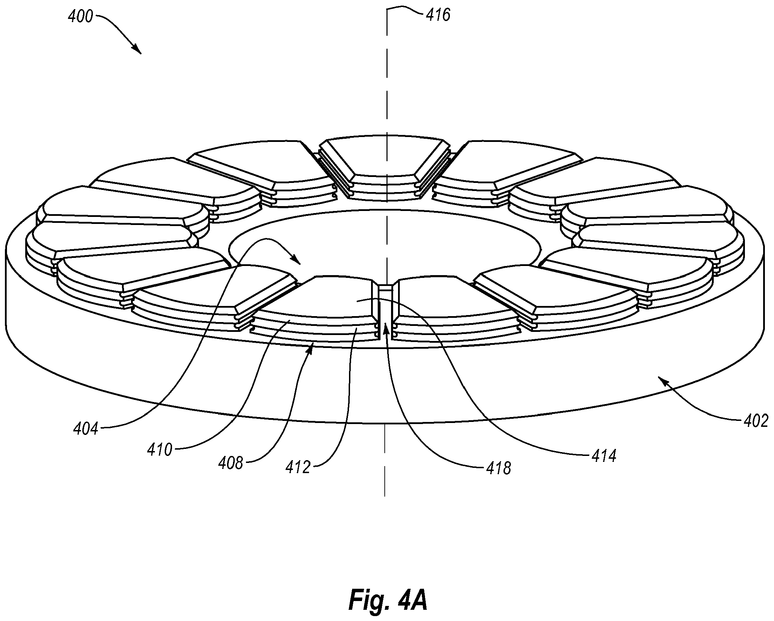

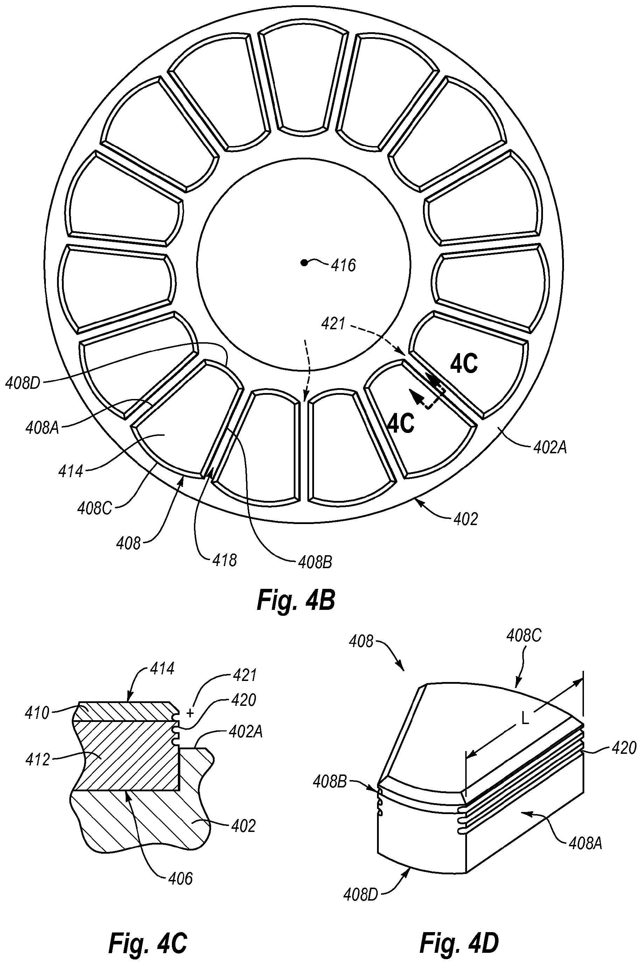

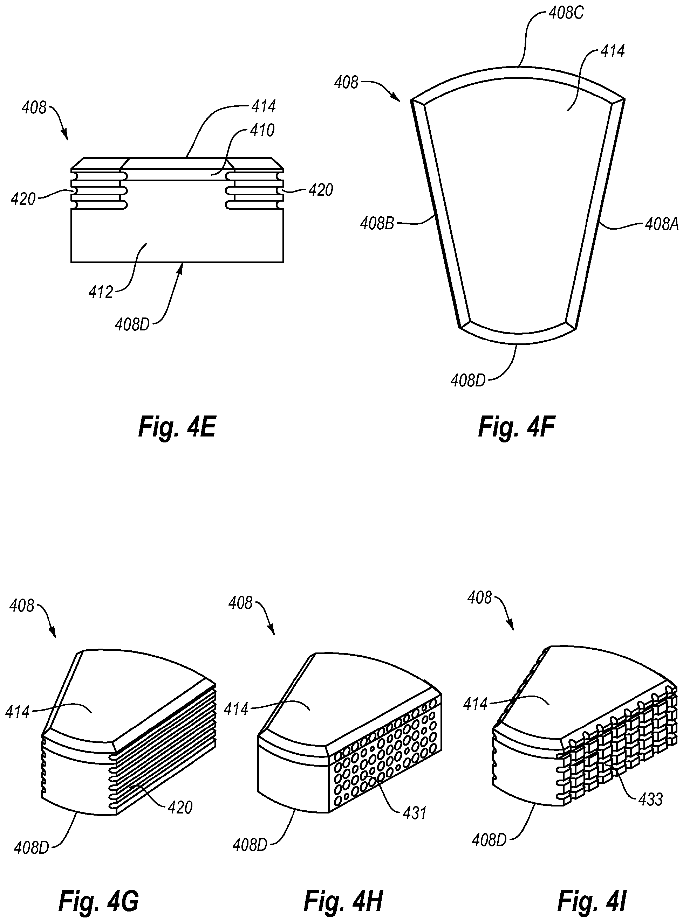

**FIGS. 4A** and **4B** are isometric and top plan views of a thrust-bearing assembly 400 according to an embodiment. The thrust-bearing assembly 400 may form a stator or a rotor of thrust-bearing apparatus. As shown in **FIGS. 4A** and **4B****,** the thrust-bearing assembly 400 may include a support ring 402 defining an opening 404 through which a shaft (not shown) of, for example, a downhole drilling motor may extend. Similar to the support ring 102, the support ring 402 may be made from a variety of different materials. For example, the support ring 402 may comprise a metal, alloy steel, a metal alloy, carbon steel, stainless steel, tungsten carbide, or any other suitable conductive or non-conductive material. The support ring 402 may also include a plurality of recesses 406 (shown in FIG. 4C) formed therein.

The thrust-bearing assembly 400 further may include a plurality of superhard bearing elements 408. In an embodiment, one or more of the superhard bearing elements 408 may have a generally wedge shaped body. In other embodiments, one or more of the superhard bearing elements 408 may have a generally rectangular body, a generally oval shaped body, or any other suitable shaped body. The superhard bearing elements 408 may include a superhard table 410 bonded to a substrate 412, and a bearing surface 414 of the superhard table 410. The superhard bearing elements 408 are illustrated in **FIGS. 4A** and **4B** being distributed circumferentially about a thrust axis 416 along which a thrust force may be generally directed during use. The superhard bearing elements 408 may be circumferentially distributed about the thrust axis 416 in one row, two rows, three rows, or any number of suitable rows. As shown, gaps 418 may be located between adjacent ones of the superhard bearing elements 408 through which lubricating fluid may flow, as illustrated by flow arrows 421. In an embodiment, at least one of, some of, or all of the gaps 418 may exhibit a width of about 0.00020 inches to about 0.100 inches, such as about 0.00040 inches to about 0.0010 inches, or about 0.00040 inches to about 0.080 inches. In other embodiments, the gaps 418 may have widths that are relatively larger or smaller. In other embodiments, the gaps 418 may substantially be zero and the adjacent ones of the superhard bearing elements 408 may abut each other. In other embodiments, one or more of the gaps 418 may have different widths. For example, one pair of adjacent ones of the superhard bearing elements 408 may be closer together than another pair of adjacent ones of the superhard bearing elements 408.

Each of the superhard bearing elements 408 may be partially disposed in a corresponding one of the recesses 406 (shown in **FIG. 4C**) of the support ring 402. The superhard bearing elements 408 may be partially positioned in and secured to the recesses 406 via brazing, welding, soldering, press-fitting, threadly attaching, fastening with a fastener, combinations of the foregoing, or another suitable technique. Similar to the superhard bearing elements 108, the superhard bearing elements 408 may be machined to tolerances and mounted in the support ring 402 and/or attached to the support ring 402. Bearing surfaces 414 may be planarized (e.g., by lapping and/or grinding) and/or positioned so that the bearing surfaces 414 are substantially coplanar. Optionally, one or more of the superhard bearing elements 408 may exhibit a peripherally extending edge chamfer. However, in other embodiments, the edge chamfer may be omitted.

**FIGS. 4D-4F** are isometric, side elevation, and top plan views of a superhard bearing element 408 removed from the thrust-bearing assembly 400. The superhard bearing element 408 may be made from any of the materials discussed above for the superhard bearing elements 108. The superhard bearing elements 408 may include a first lateral surface 408A, a second lateral surface 408B, a first end surface 408C, and a second end surface 408D. The first lateral surface 408A and the second lateral surface 408B of each of the superhard bearing elements 408 may extend between the first end surface 408C and the second end surface 408D and vice versa. In an embodiment, the first lateral surface 408A and the second lateral surface 408B may be non-parallel to each other such that the superhard bearing elements 408 have a wedge-like shape. In the illustrated embodiment, both the first end surface 408C and the second end surface 408D may have a convex curvature. In other embodiments, the first end surface 408C and the second end surface 408D may have symmetrical edge configurations, asymmetrical edge configurations, curved edge configurations, irregular edge configurations, or other suitable edge configurations. For example, the first end surface 408C and the second end surface 408D may take the form of any portion of a circle, oval, square, rectangle, rhombus, triangle, or virtually any other simple, complex, regular, irregular, or non-symmetrical geometric shape. Optionally, the first end surface 408C may have an area greater than an area of the second end surface 408D. In other embodiments, the first end surface 408C and the second end surface 408D may be substantially the same size.

Like the superhard bearing elements 108, 208, and 308, one or more of the superhard bearing elements 408 may include one or more features (e.g., at least one groove) configured to influence bearing capacity and/or influence cooling of the superhard bearing elements 408. For example, one or more grooves 420 may be formed in the first lateral surface 408A and/or the second lateral surface 408B of the superhard bearing elements 408. One or more of the grooves 420 may be formed by CNC milling, EDM, laser-cutting, grinding, combinations thereof, or otherwise machining the one or more grooves 420 in the superhard bearing elements 408 before or after securing the superhard bearing elements 408 to the support ring 402.

In an embodiment, the grooves 420 may be formed substantially parallel to the bearing surface 414 of the superhard bearing element 408. Some or all of the grooves 420 may have a length that extends along a path between the first end surface 408C and the second end surface 408D, or vice versa. In other embodiments, the length L of some or all of the grooves 420 may extend along only a portion of the first lateral surface 408A and/or the second lateral surface 408B. For example, the length L of a groove 420 may extend between the first end surface 408C and an intermediate location between the first end surface 408C and the second end surface 408D. Moreover, while the grooves 420 are illustrated following a generally straight path, some or all of the grooves 420 may follow a generally curved path, a generally s-shaped path, a generally sinusoidal path, or any other suitable path. As illustrated, each of the grooves 420 may have at least substantially the same length L. However, in other embodiments, some or all of the grooves 420 may have substantially different lengths L, respectively. Some or all of the grooves 420 may be further defined by a bottom portion and opposing sidewalls. Similar to the grooves 120, at least one of the grooves 420 may have a width W (not shown) and a depth D (not shown). Variations in the D and/or the width W of the grooves 420 may help the grooves 420 lubricate and/or cool the superhard bearing elements 408. While all the superhard bearing elements 408 are shown including substantially identical grooves 420, in other embodiments, only a portion of the superhard bearing elements 408 may have substantially identical grooves 420 and/or the superhard bearing elements 408 may have grooves 420 of varying sizes and/or configurations. The grooves 420 may include edge features configured to influence flow conditions of the lubricating fluid. For example, the grooves 420 may include beveled edges, rounded edges, chamfered edges, or the like. One or more of the grooves may include edges that are sharpened, notched, irregularly shaped, combinations thereof, or the like. Such a configuration may allow the grooves 420 to partially agitate, break-up or create desired flow characteristics in the lubricating fluid.

The grooves 420 may be formed in rows positioned between the bearing surface 414 and a first location above a bottom surface 408A of the superhard bearing element 408. In an embodiment, the first location may generally correspond to an upper surface 402A of the support ring 402 such that the grooves 420 are positioned between the bearing surface 414 and the upper surface 402A of the support ring 402 during operation of the thrust-bearing assembly 400. In other embodiments, the first location may be below the upper surface 402A of the support ring 402. In yet other embodiments, the grooves 420 may be formed in rows positioned substantially between the bearing surface 414 and the bottom surface of the superhard bearing element 408 as shown in **FIG. 4G****.** Such a configuration may allow the grooves 420 to be located within the recesses 406 during operation of the thrust-bearing assembly 400. In other embodiments, the position of the rows of grooves 420 may vary from one superhard bearing element 408 to another.

Referring again to **FIG. 4C****,** the grooves 420 may influence flow conditions between adjacent ones of the superhard bearing elements 408 during operation of the thrust-bearing assembly 400. For example, as shown by the flow arrow 421, the grooves 420 may increase the surface area of the superhard bearing elements 408 in contact with lubricating fluid flowing between adjacent ones of the superhard bearing elements 408. In an embodiment, the grooves 420 may direct lubricating fluid flowing between adjacent ones of the superhard bearing elements 408 about and/or over the superhard bearing elements 408 and/or the support ring 402. For example, at least some of the grooves 420 may extend along a curved path toward the bearing surface 414. In another embodiment, the grooves 420 may increase the surface area of the superhard bearing elements 408 to enhance the heat transfer rate of the superhard bearing element 408.

Embodiments of the invention further include other surface topographies that may be formed into a lateral surface of a superhard bearing element. For example, dimpled, textured, recessed, cross-hatched, or other surface features or topography may be employed for increasing heat transfer from a superhard bearing element. In an embodiment, as shown in **FIG. 4H****,** the lateral surface of the superhard bearing element 408 may include a plurality of dimples 431 formed therein to help enhance heat removal from the superhard bearing element 408. The dimples 431 may cover substantially the entire lateral surface, extending between the bearing surface 414 and a bottom surface of the superhard bearing element 408 and the second end surface 408D and the first end surface (not shown). The dimples 431 may be generally concavely shaped, variably sized, or uniformly distributed. Flow of the lubricating fluid over the dimples 431 may create small vortices and/or increase the surface area of the lateral surface in contact with the lubricating fluid to help enhance heat removal from the superhard bearing element 408. While the dimples 431 are illustrated being generally concave, variably sized, and evenly distributed, in other embodiments, the dimples 431 may have other suitable shapes, sizes, and/or distributions. For example, the dimples 431 may be generally triangular shaped or cubic shaped and may be staggered, similarly sized, and only on a portion of the lateral surface.

In another embodiment, the lateral surface of the superhard bearing element 408 may be cross-hatched to help enhance heat removal from the superhard bearing element 408. As shown in **FIG. 4I**, the cross-hatch 433 may include a plurality of intersecting grooves extending between the bearing surface 414, the bottom surface, the second end surface 408D, and the first end surface (not shown) of the superhard bearing element 408. The cross-hatch 433 may increase the surface area of the superhard bearing element 408 in contact with the lubricating fluid to help remove heat from the superhard bearing element 408. Moreover, the cross-hatch 433 may direct lubricating fluid about and/or over the superhard bearing element 408 to enhance heat removal.

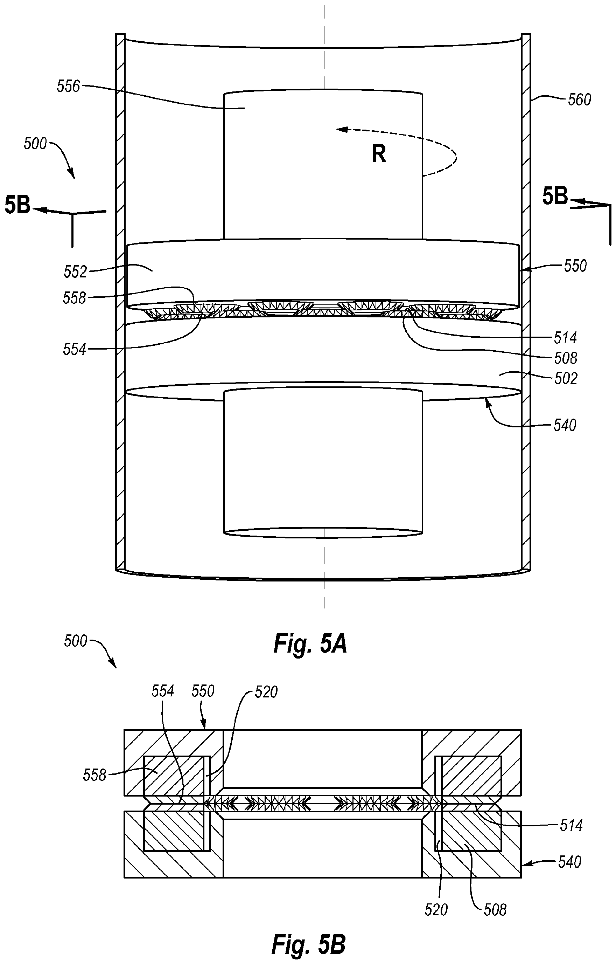

Any of the above-described thrust-bearing assembly embodiments may be employed in a thrust-bearing apparatus. **FIG. 5A** is an isometric view of a thrust-bearing apparatus 500. The thrust-bearing apparatus 500 may include a stator 540 configured as any of the previously described embodiments of thrust-bearing assemblies. The stator 540 may include a plurality of circumferentially-adjacent superhard bearing elements 508. The superhard bearing elements 508 may include a bearing surface 514 and at least some of the superhard bearing elements 508 may exhibit, for example, the configuration of the superhard bearing elements 108. The superhard bearing elements 508 may be mounted or otherwise attached to a support ring 502. The thrust-bearing apparatus 500 further may include a rotor 550. The rotor 550 may include a support ring 552 and a plurality of superhard bearing elements 558 mounted or otherwise attached to the support ring 552, with each of the superhard bearing elements 558 having a bearing surface 554. As shown, a shaft 556 may be coupled to the support ring 552 and operably coupled to an apparatus capable of rotating the shaft 556 in a direction R (or in a generally opposite direction), such as a downhole motor. For example, the shaft 556 may extend through and may be secured to the support ring 552 of the rotor 550 by press-fitting or threadly coupling the shaft 556 to the support ring 552 or another suitable technique. A housing 560 may be secured to the support ring 502 of the stator 540 and may extend circumferentially about the shaft 556 and the rotor 550.

**FIG. 5B** is a cross-sectional view in which the shaft 556 and housing 560 are not shown for clarity. In operation, lubricating filling fluid, or mud may be pumped between the shaft 556 and the housing 560, and between the superhard bearing elements 558 of the rotor 550. Grooves 520 of the superhard bearing elements 558 of the rotor 550 may help direct lubricating fluid over and/or around the superhard bearing elements 508 and 558 which in turn can greatly reduce friction between the bearing surfaces 514 of the stator 540 and the bearing surfaces 554 of the rotor 550. The grooves 520 may also help cool the superhard bearing elements 558 of the rotor 550 by increasing the surface area of the superhard bearing elements 558 in contact with the lubricating fluid thus improving bearing capacity. In other embodiments, the grooves 520 help cool the support ring 552 of the rotor 550 by increasing the surface area of the support ring 552 in contact with the lubricating fluid. In addition, the grooves 520 may help improve bearing capacity by increasing heat removal from the thrust-bearing apparatus 500 to influence potential annealing. Moreover, under certain operational conditions the thrust-bearing apparatus 500 may be operated as a hydrodynamic bearing. For example, where the rotational speed of the rotor 550 is sufficiently great and the thrust load is sufficiently low, a fluid film may develop between the bearing surfaces 514 of the stator 540 and the bearing surfaces 554 of the rotor 550. The fluid film may have sufficient pressure to reduce or prevent contact between the respective bearing surfaces 514, 554 and thus, substantially reduce wear of the superhard bearing elements 558 and/or the superhard bearing elements 508. In such a situation, the thrust-bearing apparatus 500 may be described as operating hydrodynamically. Thus, the thrust-bearing apparatus 500 may be operated to improve lubrication, cooling, bearing capacity, and/or as a hydrodynamic bearing.

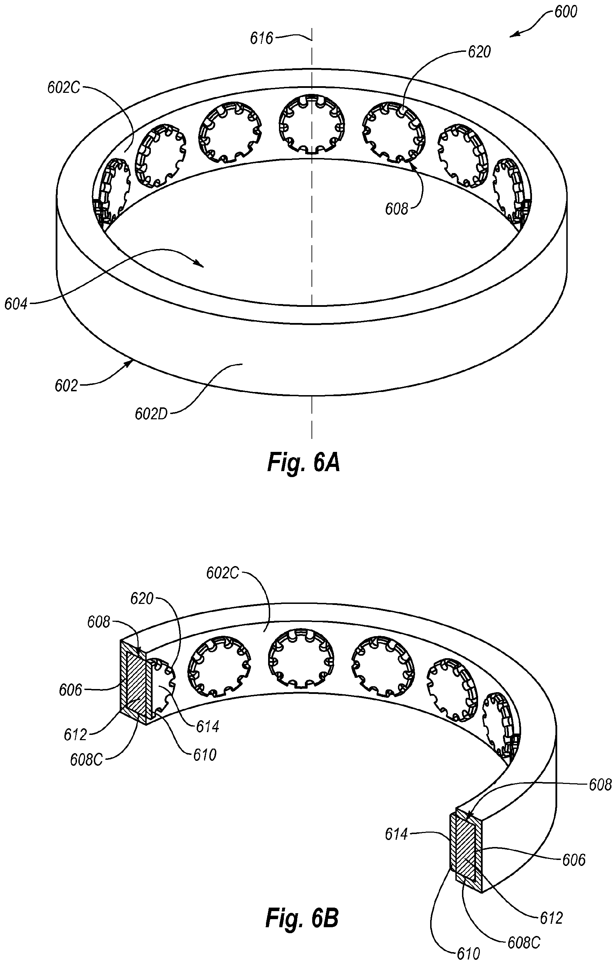

The concepts used in the thrust-bearing assemblies and apparatuses described above may also be employed in the radial bearing assemblies and apparatuses. **FIGS. 6A** and **6B** are isometric and isometric cutaway views, respectively, illustrating a radial bearing assembly 600 according to an embodiment. The radial bearing assembly 600 may include a support ring 602 extending about a rotation axis 616. The support ring 602 may include an inner peripheral surface 602C defining a central opening 604 that is capable of receiving, for example, an inner support ring or inner race. The support ring 602 may also include an outer peripheral surface 602D. A plurality of superhard bearing elements 608 may be distributed circumferentially about the rotation axis 616. Each superhard bearing element 608 may include a superhard table 610 including a concavely-curved bearing surface 614 (e.g., curved to lie on an imaginary cylindrical surface). Each superhard table 610 may be bonded or attached to a corresponding substrate 612 (shown in **FIG. 6B**). The superhard bearing elements 608 may have a generally cylindrical shape and each made from any of the materials discussed above for the superhard bearing elements 108. In other embodiments, the superhard bearing elements 608 may have a non-cylindrical shape, a generally wedge-like shape, a generally rectangular shape, a circular shape, or any other suitable shape. In an embodiment, at least some of the superhard bearing elements 608 may include a plurality of grooves 620 formed in a lateral surface 608C of the superhard bearing element 608. The grooves 620 may be configured similar to the grooves 120, 220, 320, 420, or any other groove disclosed herein. As illustrated in **FIGS. 6A** and **6B****,** the superhard bearing elements 608 may be distributed circumferentially about the rotation axis 616 in corresponding recesses 606 formed in the support ring 602 and arranged in a single row. In other embodiments, the superhard bearing elements 608 may be circumferentially distributed in two rows, three rows, four rows, or any number of rows.

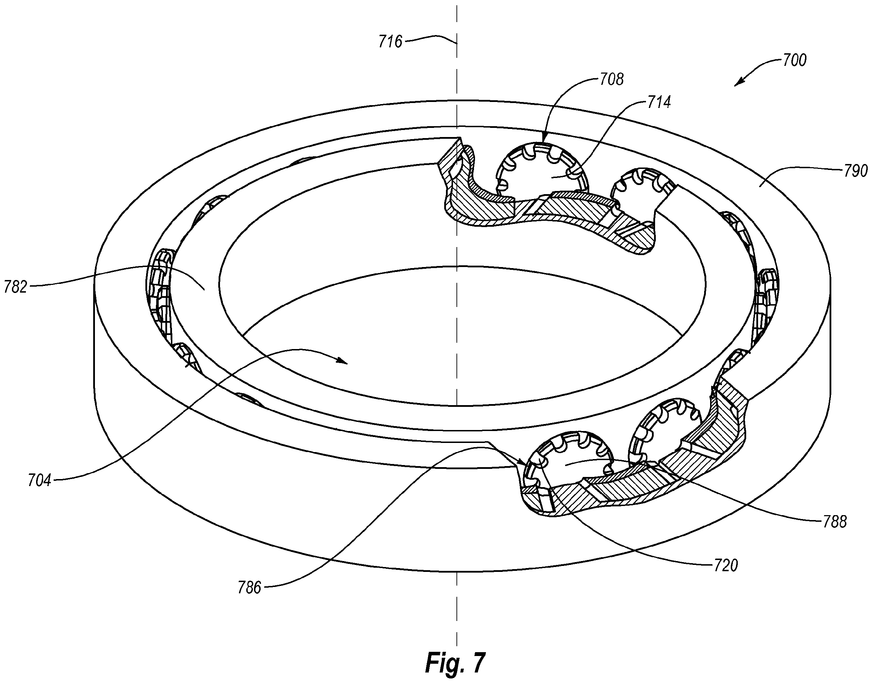

**FIG. 7** is an isometric cutaway view of a radial bearing apparatus 700 according to an embodiment. The radial bearing apparatus 700 may include an inner race 782 (*i.e*., a rotor). The inner race 782 may define an opening 704 and may include a plurality of circumferentially-adjacent superhard bearing elements 786 distributed about a rotation axis 716, each of which includes a convexly-curved bearing surface 788. The radial bearing apparatus 700 may further include an outer race 790 (*i.e.,* a stator) that extends about and receives the inner race 782. The outer race 790 may include a plurality of circumferentially-adjacent superhard bearing elements 708 distributed about the rotation axis 716, each of which includes a concavely-curved bearing surface 714 curved to correspond to the convexly-curved bearing surfaces 788. The superhard bearing elements 708 and 786 may have a generally cylindrical shape and each may be made from any of the materials discussed above for the superhard bearing elements 108. In other embodiments, the superhard bearing elements 708 and 786 may have a generally wedge-like shape, a generally rectangular shape, a non-cylindrical shape, or any other suitable shape. The terms "rotor" and "stator" refer to rotating and stationary components of the radial bearing apparatus 700, respectively. Thus, if the outer race 790 is configured to remain stationary, the outer race 790 may be referred to as the stator and the inner race 782 may be referred to as the rotor.

At least some of the superhard bearing elements 786 and/or the superhard bearing elements 708 may include a plurality of grooves 720 formed in a lateral surface thereof. One or more of the grooves 720 may be configured to influence lubrication, cooling, and/or bearing capacity of the superhard bearing elements 786, 708 and/or the inner race 782 and/or the outer race 790. Moreover, under certain operating conditions the grooves 720 may help form a fluid film similar to the description in relation to **FIGS. 5A** and **5B**. A shaft or spindle (not shown) may extend through the opening 704 and may be secured to the rotor 782 by press-fitting the shaft or spindle to the rotor 782, threadly coupling the shaft or spindle to the rotor 782, or another suitable technique. A housing (not shown) may also be secured to the stator 790 using similar techniques.

The radial bearing apparatus 700 may be employed in a variety of mechanical applications. For example, so-called "rotary cone" rotary drill bits, pumps, transmissions or turbines may benefit from a radial bearing apparatus discussed herein.

It is noted that the outer race 790 of the radial bearing apparatus 700 is shown also including a plurality of circumferentially-distributed superhard bearing elements 708 with a plurality of grooves configured to influence lubrication, cooling, and/or bearing capacity of the radial bearing apparatus 700. However, in other embodiments, an outer race or the inner race of a radial bearing apparatus may include a plurality of circumferentially distributed superhard bearing elements without grooves.

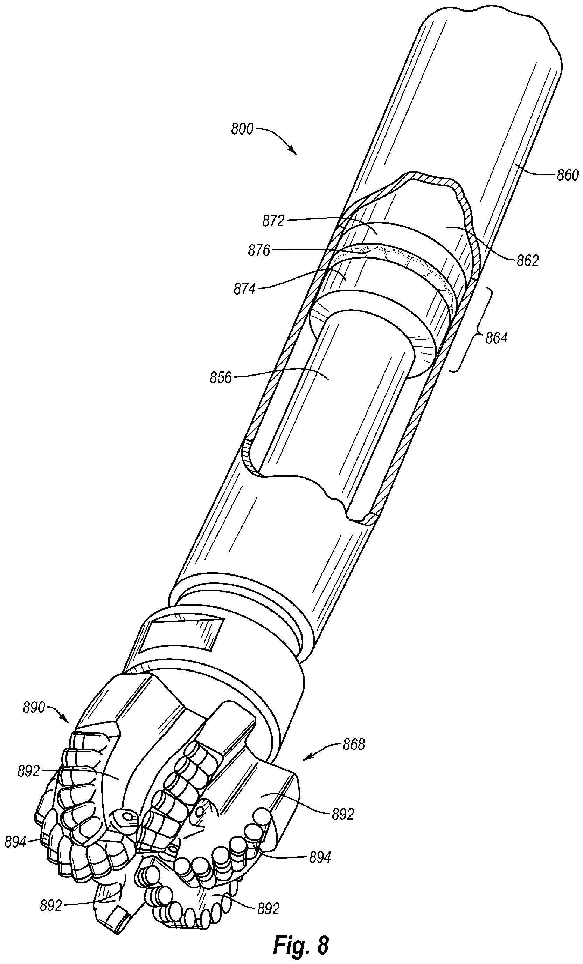

Any of the embodiments for bearing apparatuses discussed above may be used in a subterranean drilling system. **FIG. 8** is a schematic isometric cutaway view of a subterranean drilling system 800 according to an embodiment. The subterranean drilling system 800 may include a housing 860 enclosing a downhole drilling motor 862 (*i.e.,* a motor, turbine, or any other device capable of rotating an output shaft) that may be operably connected to an output shaft 856. A thrust-bearing apparatus 864 may be operably coupled to the downhole drilling motor 862. The thrust-bearing apparatus 864 may be configured as any of the previously described thrust-bearing apparatus embodiments. A rotary drill bit 868 may be configured to engage a subterranean formation and drill a borehole and may be connected to the output shaft 856. The rotary drill bit 868 is a fixed-cutter drill bit and is shown comprising a bit body 890 having radially-extending and longitudinally-extending blades 892 with a plurality of PDCs secured to the blades 892. However, other embodiments may utilize different types of rotary drill bits, such as core bits and/or roller-cone bits. As the borehole is drilled, pipe sections may be connected to the subterranean drilling system 800 to form a drill string capable of progressively drilling the borehole to a greater size or depth within the earth.

The thrust-bearing apparatus 864 may include a stator 872 that does not rotate and a rotor 874 that may be attached to the output shaft 856 and rotates with the output shaft 856. As discussed above, the thrust-bearing apparatus 864 may be configured as any of the embodiments disclosed herein. For example, the stator 872 may include a plurality of circumferentially-distributed superhard bearing elements 876 similar to the superhard bearing elements 508 shown and described in the thrust-bearing apparatus 500 of **FIG. 5A****.** The rotor 874 may include a plurality of circumferentially-distributed superhard bearing elements (not shown) such as shown and described in relation to **FIGS. 1A**-**4G**.

In operation, drilling fluid may be circulated through the downhole drilling motor 862 to generate torque and rotate the output shaft 856 and the rotary drill bit 868 attached thereto so that a borehole may be drilled. A portion of the drilling fluid may also be used to lubricate opposing bearing surfaces of the stator 872 and the rotor 874. When the rotor 874 is rotated, grooves of the superhard bearing elements of the rotor 874 may pump the drilling fluid onto the bearing surfaces of the stator 872 and/or the rotor 874, as previously discussed.

Although the bearing assemblies and apparatuses described above have been discussed in the context of subterranean drilling systems and applications, in other embodiments, the bearing assemblies and apparatuses disclosed herein are not limited to such use and may be used for many different applications, if desired, without limitation. Thus, such bearing assemblies and apparatuses are not limited for use with subterranean drilling systems and may be used with various mechanical systems, without limitation.

## Claims

1. A bearing assembly (100), comprising:
a support ring (102) including an upper surface (402A); and
a plurality of superhard bearing elements (108) carried by the support ring (102), the plurality of superhard bearing elements (108) distributed circumferentially about an axis (116), each of the plurality of superhard bearing elements (108) including a bearing surface (114), **characterised in that** at least one of the plurality of superhard bearing elements (108) includes a plurality of laterally spaced texture features formed in a lateral surface (108B) thereof,
the plurality of laterally spaced texture features extending to the upper surface (402A) of the support ring (102), and the plurality of laterally spaced texture features comprises at least one groove.

2. The bearing assembly of claim 1, wherein the plurality of laterally spaced texture features are positioned and configured to direct lubricating fluid over and/or around one or more of the plurality of superhard bearing elements (108).

3. The bearing assembly of claim 1, wherein the plurality of laterally spaced texture features extend between the bearing surface (114) of the at least one of the plurality of superhard bearing elements (108) and a location positioned between the upper surface (402A) of the support ring (102) and a bottom surface (108A) of the at least one ofthe plurality of superhard bearing elements (108).

4. The bearing assembly of claim 1, wherein the plurality of laterally spaced texture features follow a path substantially extending between the bearing surface (114) ofthe at least one of superhard bearing elements (108) and a bottom surface (108A) of the at least one ofthe plurality of superhard bearing elements (108).

5. The bearing assembly of claim 4, wherein the path includes at least one of a generally curved path, a generally linear path, a generally semi-cylindrical path, or a generally helical curved path.

6. The bearing assembly of claim 1, wherein at least a portion of the plurality of laterally spaced texture features include a cross-sectional area at least partially defined between opposing sidewalls (120A), the cross-sectional area having a generally v-shaped geometry, a generally parabolic geometry, or a generally rectangular geometry.

7. The bearing assembly of claim 1, wherein the plurality of laterally spaced texture features include a length extending along a portion of the lateral surface (108B) of the at least one of the plurality of the superhard bearing elements (108) and a depth extending between the lateral surface (108B) and a bottom portion of the plurality of laterally spaced texture features.

8. The bearing assembly of claim 1, wherein the plurality of laterally spaced texture features follow a path substantially extending between a first end surface (408C) and a second end surface (408D) of one or more of the at least one of the plurality of superhard bearing elements (108).

9. The bearing assembly of claim 1, wherein the plurality of laterally spaced texture features includes a plurality of grooves, dimples, recesses, protrusions, or cross-hatching grooves.

10. The bearing assembly of any of claims 1-9, wherein the at least one of the plurality of superhard bearing elements (108) includes a superhard table (110) bonded to a substrate, and wherein the plurality of laterally spaced texture features are located only in the superhard table (110).

11. The bearing assembly of any of claims 1-10, wherein the axis (116) is a thrust axis, and wherein the support ring (102) and the plurality of superhard bearing elements (108) define a thrust-bearing assembly (100); or wherein the axis (116) is a rotation axis, and wherein the support ring (102) and the plurality of superhard bearing elements (108) define a radial bearing assembly (100).

12. A bearing apparatus including a stator (540) and a rotor (550) operably assembled with each other, at least one of the stator (540) or the rotor (550) configured according to any of the bearing assemblies of claims 1-11.

13. A method for manufacturing a bearing assembly (100), the method comprising:
forming a plurality of laterally spaced texture features, including at least one groove, in a lateral surface (108B) of at least one superhard bearing element (108) including a bearing surface (114); and
securing the superhard bearing element (108) to a support ring (102) such that the at least one groove extends to an upper surface (402A) of the support ring (102).

14. The method of claim 13, wherein the at least one groove is formed in the lateral surface (108B) of the at least one superhard bearing element (108) before the at least one superhard bearing element (108) is secured to the support ring (102).

15. The method of claim 13, wherein forming the plurality of laterally spaced texture features comprise at least one of laser-cutting, electro-discharge machining, or computer numerical control milling the plurality of laterally spaced texture features in the lateral surface (108B).

## Patentansprüche

1. Lagerbaugruppe (100), aufweisend:
einen Trägerring (102) mit einer oberen Oberfläche (402A); und
mehrere von dem Trägerring (102) getragene superharte Lagerelemente (108), die im Umkreis um eine Achse (116) verteilt sind und jeweils eine Lagerfläche (114) aufweisen,
**dadurch gekennzeichnet, dass** mindestens eines der mehreren superharten Lagerelemente (108) mehrere lateral beabstandete Strukturmerkmale aufweist, die in einer lateralen Oberfläche (108B) davon gebildet sind, wobei die mehreren lateral beabstandeten Strukturmerkmale sich zu der oberen Oberfläche (402A) des Trägerrings (102) erstrecken und die mehreren lateral beabstandeten Strukturmerkmale mindestens eine Rille aufweisen.

2. Lagerbaugruppe nach Anspruch 1, wobei die mehreren lateral beabstandeten Strukturmerkmale angeordnet und konfiguriert sind, um Schmierfluid über und/oder um eines oder mehrere der mehreren superharten Lagerelemente (108) zu führen.

3. Lagerbaugruppe nach Anspruch 1, wobei die mehreren lateral beabstandeten Strukturmerkmale sich zwischen der Lagerfläche (114) des mindestens einen der mehreren superharten Lagerelemente (108) und einem Ort erstrecken, der sich zwischen der oberen Oberfläche (402A) des Trägerrings und einer Bodenfläche (108A) des mindestens einen der mehreren superharten Lagerelemente (108) befindet.

4. Lagerbaugruppe nach Anspruch 1, wobei die mehreren lateral beabstandeten Strukturmerkmale einem Pfad folgen, der sich im Wesentlichen zwischen der Lagerfläche (114) des mindestens einen der superharten Lagerelemente (108) und einer Bodenfläche (108A) des mindestens einen der mehreren superharten Lagerelemente (108) erstreckt.

5. Lagerbaugruppe nach Anspruch 4, wobei der Pfad einen allgemein krummlinigen Pfad und/oder einen allgemein linearen Pfad und/oder einen allgemein halbzylindrischen Pfad und/oder einen allgemein helikal gekrümmten Pfad aufweist.

6. Lagerbaugruppe nach Anspruch 1, wobei mindestens ein Abschnitt der mehreren lateral beabstandeten Strukturmerkmale eine Querschnittfläche aufweist, die zumindest teilweise zwischen gegenüberliegenden Seitenwänden (102A) definiert ist, wobei die Querschnittfläche eine allgemein V-förmige Geometrie, eine allgemein parabolische Geometrie oder eine allgemein rechteckförmige Geometrie hat.

7. Lagerbaugruppe nach Anspruch 1, wobei die mehreren lateral beabstandeten Strukturmerkmale eine Länge, die sich entlang eines Abschnitts der lateralen Oberfläche (108A) des mindestens einen der mehreren superharten Lagerelemente (108) erstreckt, und eine Tiefe, die sich zwischen der lateralen Oberfläche (108B) und einem Bodenabschnitt der mehreren lateral beabstandeten Strukturmerkmale erstreckt, aufweisen.

8. Lagerbaugruppe nach Anspruch 1, wobei die mehreren lateral beabstandeten Strukturmerkmale einem Pfad folgen, der sich im Wesentlichen zwischen einer ersten Endfläche (408C) und einer zweiten Endfläche (408D) eines oder mehrerer des mindestens einen der mehreren superharten Lagerelemente (108) erstreckt.

9. Lagerbaugruppe nach Anspruch 1, wobei die mehreren lateral beabstandeten Strukturmerkmale mehrere Rillen, Vertiefungen, Aussparungen, Vorsprünge oder kreuzschraffierte Rillen aufweisen.

10. Lagerbaugruppe nach einem der Ansprüche 1 bis 9, wobei das mindestens eine der mehreren superharten Lagerelemente (108) einen mit einem Substrat verbundenen superharten Tisch (110) aufweist und wobei die mehreren lateral beabstandeten Strukturmerkmale nur in dem superharten Tisch (110) angeordnet sind.

11. Lagerbaugruppe nach einem der Ansprüche 1 bis 10, wobei die Achse (116) eine Druckachse ist und wobei der Trägerring (102) und die mehreren superharten Lagerelemente (108) eine Drucklageranordnung (100) definieren; oder wobei die Achse (116) eine Rotationsachse ist und der Trägerring (102) und die mehreren superharten Lagerelemente (108) eine Radiallageranordnung (100) definieren.

12. Lagervorrichtung aufweisend einen Stator (540) und einen Rotor (550), die operativ miteinander gekoppelt sind, wobei der Stator (540) und/oder der Rotor (550) gemäß einer Lagerbaugruppe nach einem der Ansprüche 1 bis 11 konfiguriert ist.

13. Verfahren zur Herstellung einer Lagerbaugruppe (100), wobei das Verfahren aufweist:
Bilden mehrerer lateral beabstandeter Strukturmerkmale, die mindestens eine Rille aufweisen, in einer lateralen Oberfläche (108B) mindestens eines superharten Lagerelements (108), das eine Lagerfläche (114) aufweist; und
Anbringen des superharten Lagerelements (108) an einem Trägerring (102) derart, dass die mindestens eine Rille sich zu einer oberen Oberfläche (402) des Trägerrings (102) erstreckt.

14. Verfahren nach Anspruch 13, wobei die mindestens eine Rille in der lateralen Oberfläche (108B) des mindestens einen superharten Lagerelements (108) gebildet wird, bevor das mindestens eine superharte Lagerelement (108) an dem Trägerring (102) angebracht wird.

15. Verfahren nach Anspruch 13, wobei das Bilden mehrerer lateral beabstandeter Strukturmerkmale aufweist: Bilden der mehreren lateral beabstandeten Strukturmerkmale in der lateralen Oberfläche (108B) unter Verwendung von Laserstrahlschneiden und/oder Bearbeitung mittels elektrischer Entladung und/oder CNC-Fräsen.

## Revendications

1. Ensemble de paliers (100) comprenant :
un anneau de support (102) incluant une surface supérieure (402A) ; et
une pluralité d'éléments de palier superdurs (108) portés par l'anneau de support (102), la pluralité d'éléments de palier superdurs (108) étant distribuée sur la circonférence autour d'un axe (116), chacun de la pluralité d'éléments de palier superdurs (108) incluant une surface de palier (114), **caractérisé en ce que** au moins un de la pluralité d'éléments de palier superdurs (108) inclut une pluralité de caractéristiques de texture espacées latéralement formées dans une surface latérale (108B) de ceux-ci,
la pluralité de caractéristiques de texture espacées latéralement s'étendant sur la surface supérieure (402A) de l'anneau de support (102), et
la pluralité de caractéristiques de texture espacées latéralement comprend au moins une rainure.

2. Ensemble de paliers selon la revendication 1, dans lequel la pluralité de caractéristiques de texture espacées latéralement est positionnée et configurée pour diriger du fluide lubrifiant sur et/ou autour d'un ou plusieurs de la pluralité d'éléments de palier superdurs (108).

3. Ensemble de paliers selon la revendication 1, dans lequel la pluralité de caractéristiques de texture espacées latéralement s'étend entre la surface de palier (114) de l'au moins un de la pluralité d'éléments de palier superdurs (108) et un emplacement positionné entre la surface supérieure (402A) de l'anneau de support (102) et une surface inférieure (108A) de l'au moins un de la pluralité d'éléments de palier superdurs (108).

4. Ensemble de paliers selon la revendication 1, dans lequel la pluralité de caractéristiques de texture espacées latéralement suit un chemin s'étendant sensiblement entre la surface de palier (114) de l'au moins un des éléments de palier superdurs (108) et une surface inférieure (108A) de l'au moins un de la pluralité d'éléments de palier superdurs (108).

5. Ensemble de paliers selon la revendication 4, dans lequel le chemin inclut au moins un parmi un chemin généralement courbé, un chemin généralement linéaire, un chemin généralement semi-cylindrique ou un chemin courbé généralement en hélice.

6. Ensemble de paliers selon la revendication 1, dans lequel au moins une partie de la pluralité de caractéristiques de texture espacées latéralement inclut une zone de section transversale définie au moins partiellement entre des parois latérales opposées (120A), la zone de section transversale présentant une géométrie généralement en forme de V, une géométrie généralement parabolique ou une géométrie généralement rectangulaire.

7. Ensemble de paliers selon la revendication 1, dans lequel la pluralité de caractéristiques de texture espacées latéralement inclut une longueur s'étendant le long d'une partie de la surface latérale (108B) de l'au moins un de la pluralité des éléments de palier superdurs (108) et une profondeur s'étendant entre la surface latérale (108B) et une partie inférieure de la pluralité de caractéristiques de texture espacées latéralement.

8. Ensemble de paliers selon la revendication 1, dans lequel la pluralité de caractéristiques de texture espacées latéralement suit un chemin s'étendant sensiblement entre une première surface d'extrémité (408C) et une seconde surface d'extrémité (408D) d'un ou plusieurs de l'au moins un de la pluralité d'éléments de palier superdurs (108).

9. Ensemble de paliers selon la revendication 1, dans lequel la pluralité de caractéristiques de texture espacées latéralement inclut une pluralité de rainures, creux, évidements, saillies ou rainures hachurées.

10. Ensemble de paliers selon l'une quelconque des revendications 1 à 9, dans lequel l'au moins un de la pluralité d'éléments de palier superdurs (108) inclut une table superdure (110) liée à un substrat, et dans lequel la pluralité de caractéristiques de texture espacées latéralement est située seulement dans la table superdure (110).

11. Ensemble de paliers selon l'une quelconque des revendications 1 à 10, dans lequel l'axe (116) est un axe de poussée et dans lequel l'anneau de support (102) et la pluralité d'éléments de palier superdurs (108) définissent un ensemble de paliers de poussée (100) ; ou dans lequel l'axe (116) est un axe de rotation, et dans lequel l'anneau de support (102) et la pluralité d'éléments de palier superdurs (108) définissent un ensemble de paliers radiaux (100).

12. Appareil de paliers incluant un stator (540) et un rotor (550) assemblés en fonctionnement l'un avec l'autre, au moins un du stator (540) ou du rotor (550) étant configuré selon l'un quelconque des ensembles de paliers des revendications 1 à 11.

13. Procédé de fabrication d'un ensemble de paliers (100), le procédé comprenant :
la formation d'une pluralité de caractéristiques de texture espacées latéralement, incluant au moins une rainure, dans une surface latérale (108B) d'au moins un élément de palier superdur (108) incluant une surface de palier (114) ; et
la fixation de l'élément de palier superdur (108) à un anneau de support (102) de sorte que l'au moins une rainure s'étende jusqu'à une surface supérieure (402A) de l'anneau de support (102).

14. Procédé selon la revendication 13, dans lequel l'au moins une rainure est formée dans la surface latérale (108B) de l'au moins un élément de palier superdur (108) avant que l'au moins un élément de palier superdur (108) ne soit fixé à l'anneau de support (102).

15. Procédé selon la revendication 13, dans lequel la formation de la pluralité de caractéristiques de texture espacées latéralement comprend au moins un parmi la coupe laser, l'usinage par décharge électrique ou le fraisage par commande numérique informatique de la pluralité de caractéristiques de texture espacées latéralement dans la surface latérale (108B).
